# EUROPÄISCHE PATENTSCHRIFT

(11) **EP 3 816 495 B1**
(45) Veröffentlichungstag und Bekanntmachung des Hinweises auf die Patenterteilung: **07.06.2023**
(21) Anmeldenummer: 20203202.5
(22) Anmeldetag: 22.10.2020
(51) Int. Cl.: F16L 33/207, F16L 13/14

(54) **PRESSFITTING**
PRESS FITTING
RACCORD À SERTIR

(30) Priorität: 31.10.2019 DE 102019216828
(43) Veröffentlichungstag der Anmeldung: 05.05.2021
(73) Patentinhaber: Fränkische Rohrwerke Gebr. Kirchner GmbH + Co KG, 97486 Königsberg/Bayern (DE)
(72) Erfinder: FRETER, Ludwig, 97486 Königsberg (DE); MATTOLAT, Willi, 97508 Grettstadt (DE); WELSCH, Thomas, 97437 Haßfurt (DE); VESTER, Lars, 91054 Erlangen (DE)
(74) Vertreter: Herzog, Markus

(56) Entgegenhaltungen:
- EP-A1- 1 126 206
- EP-A1- 1 775 507
- EP-A1- 2 703 707
- DE-A1-102014 216 184
- DE-U1- 20 221 504
- US-A1- 2017 191 592

## Beschreibung

Die Erfindung betrifft eine Pressverbindung, umfassend ein Pressfitting, wiederum umfassend einen Grundkörper, welcher in seinem Inneren einen Fluidströmungskanal definiert und begrenzt, wobei der Grundkörper ein erstes und ein zweites Ende aufweist, an welchen sich der Fluidströmungskanal zu einer Außenseite hin öffnet.

Es ist aus dem Stand der Technik bekannt, zum Verbinden von Kunststoffleitungen Fittinge zu verwenden, welche einen Grundkörper aus Kunststoff umfassen. Jedoch sind derartige Fittinge stets an all ihren Enden (zum Beispiel bei einem Umleitungsstück zwei Enden und bei einem T-Stück drei Enden) mit Presshülsen versehen, um darüber mit einem Rohr verpresst zu werden. Daher können keine zwei Kunststoff-Pressfittings direkt miteinander verbunden werden, sondern es bedarf stets der Anordnung eines Rohrstücks zwischen zwei Pressfittings.

Eine Pressverbindung mit einem Pressfitting, welcher einen Grundkörper mit einem darin definierten Fluidströmungskanal und einem ersten und zweiten Ende aufweist, an welchen sich der Fluidströmungskanal zu einer Außenseite hin öffnet, ist beispielsweise aus der EP 1 126 206 A1 bekannt. Weiterhin sind andere Beispiele von Pressfittingen aus den Druckschriften DE 202 21 504 U1, EP 1 775 507 A1, US 2017/191592 A1 und EP 2 703 707 A1 bekannt. Der Vollständigkeit halber soll ferner auf die DE 10 2014 216 184 A1 verwiesen sein.

Möchte man nun, beispielsweise um den Verlauf einer Rohrleitung unter Verwendung von zwei 90°-Umlenkstücken parallel seitlich zu versetzen, zwei Pressfittings in möglichst kurzer Abfolge nacheinander anordnen, so muss ein sehr kurzes Rohrstück zwischen den beiden Pressfittings eingesetzt werden. Zum einen sind sehr kurze Rohrstücke, beispielsweise zwischen 6 bis 8 cm, nur schwierig bis unmöglich zu kalibrieren und zu entgraten, zum anderen erhöhen die beiden zu verbindenden Pressstellen die Montagezeit und die Montagekosten, zumindest durch den Bedarf des zusätzlichen Rohrstücks.

Es ist daher die Aufgabe der vorliegenden Erfindung, ein Kunststoff-Pressfitting bereitzustellen, welches in der Lage ist, direkt, das heißt ohne Anordnung eines Rohrstücks dazwischen, mit einem weiteren Pressfitting, insbesondere einem weiteren Kunststoff-Pressfitting, verbunden zu werden.

Diese Aufgabe wird erfindungsgemäß durch eine im Anspruch 1 definierte Pressverbindung, umfassend ein Pressfitting gelöst, wiederum umfassend einen Grundkörper, welcher in seinem Inneren einen Fluidströmungskanal definiert und begrenzt, wobei der Grundkörper ein erstes und ein zweites Ende aufweist, an welchen sich der Fluidströmungskanal zu einer Außenseite hin öffnet, wobei das erste Ende des Pressfittings als männliches Pressverbindungsstück ausgebildet ist, welches dazu eingerichtet ist, zumindest teilweise in ein übergeordnetes, insbesondere aus Kunststoff ausgebildetes, Rohrstück, welches nicht zu dem erfindungsgemäßen Pressfitting gehört, eingeführt zu werden, um diesem Rohrstück als darin angeordneter Stützkörper für eine Verpressung des Rohrstücks mit dem Pressfitting zu dienen, wobei das zweite Ende des Pressfittings als weibliches Pressverbindungsstück ausgebildet ist, welches dazu eingerichtet ist, ein Rohrstück für eine Verpressung mit einem weiteren, nicht zu der Erfindung gehörenden, Pressfitting bereitzustellen, und wobei der Grundkörper aus Kunststoff ausgebildet ist.

Dadurch wird ein Pressfitting bereitgestellt, welches an seinem zweiten Ende ein Rohrstück nachbildet, so dass ein Standard-Pressfitting aus dem Stand der Technik direkt mit dem erfindungsgemäßen Pressfitting gekoppelt werden kann. Es ist daher nicht mehr notwendig, ein Rohrstück zwischen den beiden Pressfittings anzuordnen. Somit muss lediglich eine einzige Pressverbindung hergestellt werden, um die beiden Pressfittings zu koppeln und beispielsweise einen parallelen Versatz einer Rohrleitung zu erzeugen. Durch die Abwesenheit des zusätzlichen Rohrstücks können auch kleinere Versatzhöhen erreicht werden, das heißt ganz allgemein kann ein Platzbedarf beim Koppeln von Pressfittings unter Verwendung des erfindungsgemäßen Pressfittings reduziert werden.

Das erfindungsgemäße Pressfitting kann dabei derart ausgebildet sein, dass das erste und das zweite Ende des Pressfittings zueinander komplementär sind, das heißt, dass das erste Ende zu dem zweiten Ende passen würde, wenn das erste Ende in das zweite Ende des erfindungsgemäßen Pressfittings oder eines weiteren erfindungsgemäßen identischen Pressfittings eingesteckt werden würde. Natürlich ist es auch denkbar, dass das erfindungsgemäße Pressfitting an seinem einen Ende zur Verbindung mit Fluidleitungsstücken einer ersten Größe und an seinem anderen Ende zur Verbindung mit Fluidleitungsstücken einer zweiten Größe eingerichtet ist. So können die erste Größe und die zweite Größe der Enden des erfindungsgemäßen Pressfittings insbesondere gebräuchlichen Standardgrößen entsprechen, beispielsweise ½ Zoll und ein 1 Zoll.

Das erfindungsgemäße Pressfitting kann zwischen einer Mittelachse des Fluidströmungskanals im Bereich des ersten Endes des Grundkörpers und einer Mittelachse des Fluidströmungskanals im Bereich des zweiten Endes des Grundkörpers einen Winkel, insbesondere einen 90°-Winkel, aufweisen. Somit kann eine Strömungsrichtung in dem Fluidströmungskanal von dem ersten Ende des erfindungsgemäßen Pressfittings zu dem zweiten Ende davon verändert werden.

Das erfindungsgemäße Pressfitting kann natürlich beliebig geformt sein und beliebig viele erste und zweite Enden aufweisen, solange wenigstens ein erstes Ende und wenigstens ein zweites Ende gemäß der Erfindung an dem Pressfitting ausgebildet ist. So kann ein erfindungsgemäßes Pressfitting beispielsweise als das voranstehend beschriebene Winkelstück mit einem ersten Ende und einem zweiten Ende, als ein Verteilerstück, zum Beispiel ein T-Stück oder ein Doppel-T-Stück, mit beispielsweise zwei ersten Enden und einem zweiten Ende oder als ein Kreuzungsstück mit zwei ersten und zwei zweiten Enden ausgebildet sein. Ferner können an einem erfindungsgemäßen Pressfitting auch weitere Enden ausgebildet sein, an welchen sich der im Inneren gebildete Fluidströmungskanal zu einer Außenseite hin öffnet, wobei diese Enden zum Beispiel Gewinde aufweisen können.

Vorteilhafterweise kann der Grundkörper mit seinem ersten Ende und seinem zweiten Ende einstückig ausgebildet sein. Somit kann der Grundkörper besonders einfach aufgebaut sein. Außerdem kann ein einstückiger Aufbau des Grundkörpers eine zusätzliche Verbindungsstelle vermeiden, an welcher Undichtigkeiten auftreten könnten.

Gemäß der vorliegenden Erfindung umfasst das Pressfitting eine Presshülse, welche an dem Grundkörper derart angeordnet ist, dass sie das erste Ende des Grundkörpers zumindest teilweise umgibt. Die Presshülse kann dabei mit dem Grundkörper des Pressfittings über einen Haltering verbunden sein, welcher zum Beispiel aus Kunststoff ausgebildet ist. Die Presshülse selbst kann vorteilhafterweise aus einem Metall hergestellt sein. Insbesondere kann die Presshülse das erste Ende des Grundkörpers in einer Umfangsrichtung vollständig umgeben, in einer axialen Richtung in Bezug auf eine Längsachse des in dem ersten Ende des Grundkörpers gebildeten Fluidströmungskanals kann die Presshülse das erste Ende des Grundkörpers jedoch nur teilweise überlappen. So kann das erste Ende des Grundkörpers zum Beispiel in dieser axialen Richtung über ein Ende der Presshülse herausragen. Alternativ kann natürlich auch das Ende der Presshülse in dieser axialen Richtung über das erste Ende des Grundkörpers herausragen, so dass auch das erste Ende des Grundkörpers radial von der Presshülse umgeben ist.

Die Presshülse kann dabei an ihrer Außenseite wenigstens einen in Umfangsrichtung umlaufenden Vorsprung aufweisen, welcher dazu eingerichtet ist, mit einer Pressbacke eines Presswerkzeugs einzugreifen, über welches auf die Presshülse derart eine Kraft ausgeübt werden kann, dass das erste Ende des Grundkörpers des erfindungsgemäßen Pressfittings mit einem darin angeordneten Rohrstück oder zweiten Ende eines Grundkörpers eines weiteren erfindungsgemäßen Pressfittings verbunden werden kann. Der wenigstens eine Vorsprung der Presshülse kann somit zum einen für eine Ausrichtung einer Pressbacke an der Presshülse als auch für eine konzentrierte Kraftübertragung von der Pressbacke auf die Presshülse und damit auf das radial innerhalb der Presshülse angeordnete Material eines Bauteils verwendet werden. Natürlich kann eine verwendete Pressbacke auch selbst weitere Vorsprünge aufweisen, welche nicht mit dem wenigstens einen Vorsprung der Presshülse in Kontakt treten, so dass auch an diesen Stellen eine konzentrierte Kraftübertragung von der Pressbacke auf die Presshülse ausgeübt werden kann.

Um ein Einführen des Rohrstücks bzw. des zweiten Endes eines weiteren erfindungsgemäßen Pressfittings in einen Zwischenraum zwischen der Presshülse und dem ersten Ende des erfindungsgemäßen Pressfittings zu erleichtern, kann ein Endrand des ersten Endes des Grundkörpers sich verjüngend, das heißt zu dem Endrand des ersten Endes des Grundkörpers hin mit abnehmendem Außendurchmesser, ausgebildet sein und/oder die Presshülse kann einen sich nach radial außen aufweitenden Innendurchmesser an ihrer dem ersten Ende des Grundkörpers des erfindungsgemäßen Pressfittings zugeordneten Ende aufweisen.

Vorteilhafterweise kann der Grundkörper aus PPSU ausgebildet sein. Es hat sich gezeigt, dass es für eine Pressverbindung zwischen einem Grundkörper aus Kunststoff und einem Kunststoffrohr bzw. einem weiteren Grundkörper aus Kunststoff besonderer Eigenschaften des verwendeten Kunststoffs bedarf. So muss der Kunststoff ausreichend plastisch verformbar sein, wobei die Verformung zwischen 7,5% und 13% betragen sollte, damit eine sichere Pressverbindung hergestellt werden kann. Ferner sollte der Kunststoff eine hohe Bruchspannung besitzen, um auch unter plastischer Verformung eine ausreichend hohe Festigkeit aufzuweisen, das heißt um bei einer Pressverbindung hohen Auszugskräften widerstehen zu können. PPSU weist eine Streckdehnung von 7,2% und eine Bruchdehnung von 60% auf. Wenn die Streckdehnung eines Werkstoffs überschritten wird, verbleibt bei einem duktilen Werkstoff eine plastische Verformung. Hierbei muss berücksichtigt werden, dass ein duktiler Werkstoff ein rückfederndes Verhalten aufweist. In Fluidleitungen, in welchen das erfindungsgemäße Pressfitting üblicherweise eingesetzt werden soll, sind typischerweise Druckbelastungen bis etwa 30 MPa vorhanden. PPSU weist eine maximale Druckbelastung von etwa 99 MPa auf. Außerdem soll der Kunststoff für hohe Fluidtemperaturen geeignet, insbesondere dauertemperaturbeständig bei einer Dauergebrauchstemperatur bis zu etwa 100°C sein, wobei PPSU bis zu 160°C dauertemperaturbeständig ist.

Insbesondere kann der Grundkörper unter Verwendung eines Spritzgussverfahrens hergestellt sein. Das Verwenden eines Spritzgussverfahrens zum Ausbilden des Grundkörpers ermöglicht es, auch komplexe Grundkörper, welche eine Vielzahl von kleineren Strukturen aufweisen, detailgenau und kostengünstig herstellen zu können.

Um ein Verpressen des erfindungsgemäßen Pressfittings mit einem weiteren Pressfitting verbessern zu können, kann im Bereich des zweiten Endes des Grundkörpers wenigstens ein nach radial außen vorstehender Vorsprung ausgebildet sein, welcher den Außenumfang des Grundkörpers zumindest teilweise umgibt. Wird eine Presshülse eines weiteren Pressfittings, welche das zweite Ende des Grundkörpers des erfindungsgemäßen Pressfittings umgibt, unter Verwendung eines Presswerkzeugs derart mit einer Kraft belastet, dass die Presshülse sich nach radial innen deformiert, so kann auf den umlaufenden Vorsprung derart konzentriert Kraft ausgeübt werden, dass sich ein an den Vorsprung radial innen anschließender Abschnitt des zweiten Endes des erfindungsgemäßen Grundkörpers stärker nach radial innen verformt als ein dem Vorsprung axial benachbarter Abschnitt des zweiten Endes des Grundkörpers. Auf diese Weise kann ein gezieltes Deformieren des zweiten Endes des Grundkörpers des erfindungsgemäßen Pressfittings erreicht werden, wodurch, insbesondere in Zusammenwirkung mit einem innerhalb des zweiten Endes des Grundkörpers angeordneten Stützkörpers des weiteren Pressfittings, eine verbesserte Verbindung zwischen dem erfindungsgemäßen Pressfitting und dem weiteren Pressfitting, zum Beispiel in Bezug auf eine benötigte Auszugskraft, um die beiden Pressfittings voneinander zu trennen, oder in Bezug auf eine Druckdichtigkeit der Pressverbindung, hergestellt werden kann.

Dabei kann der wenigstens eine Vorsprung in Umfangsrichtung um den Grundkörper einen im Wesentlichen dreieckigen Querschnitt aufweisen, wobei ein Winkel, welcher von den beiden Flanken des Vorsprungs aufgespannt wird, vorteilhafterweise zwischen 5° und 90°, insbesondere zwischen 45° und 70°, betragen kann. Ganz allgemein gilt, dass beim Auslegen des Querschnitts des wenigstens einen Vorsprungs zwischen einer verbesserten Kraftübertragung bei einem steil verlaufenden Vorsprung, das heißt einem durch die beiden Flanken kleinen aufgespannten Winkel, und einer geringeren Kerbwirkung gegenüber benachbarten Bereichen bei einem flach verlaufenden Vorsprung, das heißt einem durch die beiden Flanken großen aufgespannten Winkel, abgewägt werden muss. So kann es insbesondere vorteilhaft sein, wenigstens einen ersten Vorsprung, insbesondere ein Paar von ersten Vorsprüngen, welche jeweils einen ersten Winkel aufspannen, und wenigstens einen zweiten Vorsprung, insbesondere ein Paar von zweiten Vorsprüngen, welche jeweils einen zweiten, zu dem ersten Winkel verschiedenen, Winkel aufspannen, an dem Außenumfang des zweiten Endes des Grundkörpers des erfindungsgemäßen Pressfittings vorzusehen. So kann der wenigstens eine erste Vorsprung, welcher zu einem Endrand des zweiten Endes des Grundkörpers des erfindungsgemäßen Pressfittings näher angeordnet ist, einen durch die beiden Flanken des Vorsprungs größeren aufgespannten Winkel aufweisen als der wenigstens eine zweite Vorsprung, welcher zu dem Endrand des zweiten Endes des Grundkörpers des erfindungsgemäßen Pressfittings weiter entfernt angeordnet ist.

In einer vorteilhaften Ausführungsform der vorliegenden Erfindung kann der wenigstens eine Vorsprung eine größere Erstreckung in Bezug auf den Grundkörper nach radial außen aufweisen als ein Abschnitt des Grundkörpers, welcher sich an einen Bereich des wenigstens einen Vorsprungs an einer dem zweiten Ende des Grundkörpers gegenüberliegenden Seite anschließt. In einer besonderen Ausführungsform der Erfindung kann die Wandstärke des Grundkörpers von einem beispielsweise mittleren Bereich des Grundkörpers zu dem Bereich des zweiten Endes des Grundkörpers hin zwar im Allgemeinen abnehmen, wobei die Reduktion der Wandstärke insbesondere ausschließlich durch eine Reduktion des Außendurchmessers im Bereich des zweiten Endes des Grundkörpers ausgebildet sein kann, so dass ein Durchmesser des im Inneren gebildeten Fluidströmungskanals von der Reduktion der Wandstärke nicht betroffen ist. Jedoch kann sich von dieser reduzierten Wandstärke dann der wenigstens eine Vorsprung nach radial außen derart erstrecken, dass ein an dem wenigstens einen Vorsprung genommener Außendurchmesser des Grundkörpers eine Erstreckung des Grundkörpers in dem mittleren Bereich übersteigt. Eine Reduktion der Wandstärke im Bereich des zweiten Endes des Grundkörpers bzw. im Bereich dem wenigstens einen Vorsprung benachbart kann eine Deformierbarkeit des zweiten Endes des Grundkörpers verbessern, so dass das Material des Grundkörpers verbessert mit einem darin angeordneten Stützkörper eines weiteren Pressfittings eingreifen kann.

Der sich an den Bereich des wenigstens einen Vorsprungs an der dem zweiten Ende des Grundkörpers gegenüberliegenden Seite anschließende Abschnitt (oben als "mittlerer Bereich" bezeichnet) kann insbesondere frei von Vorsprüngen sein, das heißt einen im Wesentlichen eben äußeren Wandungsverlauf aufweisen. Dieser Bereich kann besonders gut deformiert werden, um mit einem radial innerhalb angeordneten Stützkörper einzugreifen, wenn eine verwendete Pressbacke mit diesem Bereich über wenigstens einen Vorsprung der Pressbacke eingreift. Natürlich kann alternativ aber auch in diesem Bereich wenigstens ein Vorsprung angeordnet sein. Dies kann es ermöglichen, eine größere Vielfalt an unterschiedlich geformten Pressbacken verwenden zu können.

Hierfür kann ein Verhältnis der Wandstärke des Grundkörpers in dem anschließenden Abschnitt zu der Wandstärke des Grundkörpers an einer Stelle des wenigstens einen Vorsprungs zwischen 1 : 3 und 1,9 : 2, insbesondere 1,5 : 2,1, betragen. Ferner kann ein Verhältnis der Wandstärke des Grundkörpers in einem den wenigstens einen Vorsprung umgebenden Bereich zu der Wandstärke des Grundkörpers an einer Stelle der maximalen radialen Erstreckung des wenigstens einen Vorsprungs zwischen 1 : 3 und 1,9 : 2, insbesondere 1 : 2,1, betragen.

Vorteilhafterweise kann im Bereich des ersten Endes des Grundkörpers wenigstens eine Nut angeordnet sein, welche den Grundkörper zumindest teilweise an dessen Außenumfang umgibt. Die wenigstens eine Nut des Stützkörpers kann insbesondere dazu eingerichtet sein, einen deformierten Bereich eines zu dem Stützkörper radial außerhalb angeordneten Bauteils nach einem Verpressen aufzunehmen. Für den beispielhaften Fall, dass zwei erfindungsgemäße Pressfittings miteinander verbunden werden, das heißt dass das erste Ende des einen erfindungsgemäßen Pressfittings in das zweite Ende eines anderen erfindungsgemäßen Pressfittings eingesteckt wird, kann in einer radialen Richtung gesehen, im montierten Zustand der beiden Pressfittings, eine Nut des Stützkörpers des ersten Endes des einen Pressfittings mit einem Vorsprung des zweiten Endes des anderen Pressfittings ausgerichtet sein.

Um einen definierten Anschlag für das zweite Ende des einen Pressfittings bzw. ein Rohrstück an dem ersten Ende des anderen Pressfittings bereitzustellen, kann das erste Ende des Grundkörpers oder ein die Presshülse mit dem ersten Ende des Grundkörpers verbindender Haltering eine Anlagefläche aufweisen, gegen welche ein Endrand des zweiten Endes des Grundkörpers bzw. des Rohrstücks anliegen kann. Folglich kann ein Abstand von dem Endrand des zweiten Endes des Grundkörpers eines erfindungsgemäßen Pressfittings zu einer Mitte des wenigstens einen Vorsprungs an dem zweiten Ende des Grundkörpers einem Abstand entsprechen, welcher von dem Anschlag an dem ersten Ende des Grundkörpers des erfindungsgemäßen Pressfittings bis zu einer Mitte einer Nut an dem ersten Ende des Grundkörpers gemessen wird.

Vorteilhafterweise kann im Bereich des ersten Endes des Grundköpers, insbesondere in wenigstens einer dort angeordneten Nut, eine Dichtung aus einem elastischen Material angeordnet sein. Das Anordnen einer Dichtung in diesem Bereich kann eine Fluiddichtigkeit der Pressverbindung weiter unterstützen. Eine derartige Dichtung kann beispielsweise durch einen O-Ring bereitgestellt werden, welcher üblicherweise aus Gummi ausgebildet sein kann.

Ferner kann ein Außendurchmesser des wenigstens einen Vorsprungs, insbesondere aller Vorsprünge, im Bereich des zweiten Endes des Grundkörpers einem Innendurchmesser der Presshülse im Wesentlichen entsprechen, vorteilhafterweise geringfügig größer sein als der Innendurchmesser der Presshülse. Auf diese Weise kann das erfindungsgemäße Pressfitting in einen weiteren, beispielsweise ebenfalls erfindungsgemäßen, Pressfitting eingeführt werden, wobei durch das Übermaß des zweiten Endes des Grundkörpers in Bezug auf die Presshülse des weiteren Pressfittings eine Klemmkraft entsteht. Dies kann insbesondere beim Verlegen von Fluidleitungen in einer Richtung entgegen der Schwerkraft von Vorteil sein, da bereits für die noch nicht miteinander verpressten Fluidleitungen eine Selbst-Haltefunktion bereitgestellt wird.

Um diese Haltefunktion optimal bereitstellen zu können, kann der Winkel eines Vorsprung, welcher an dem zweiten Ende des Grundkörpers bereitgestellt ist, mit einem, in dem Bereich, in welchem sich die Flanken des Vorsprungs schneiden, spitz zulaufenden Querschnitt versehen sein, da sich diese Spitze beim Einführen des zweiten Endes des Grundkörpers in eine Presshülse leicht verformen kann. Es ist aber ebenfalls denkbar, an dem radial äußeren Ende des wenigstens einen Vorsprungs einen Radius oder eine Fläche, zum Beispiel ein Plateau, vorzusehen. Bei der Ausbildung derartiger Vorsprünge, kann auch der Winkel der Flanken des Vorsprungs außerhalb des oben beschriebenen Winkelbereichs liegen. So können bei Vorsprüngen mit einem Radius am radial äußeren Ende die beiden Flanken im Wesentlichen parallel zueinander nach radial außen verlaufen und dann in einen zum Beispiel halbkreisförmigen Radius übergehen.

An dieser Stelle sei explizit darauf hingewiesen, dass die Form des wenigstens einen Vorsprungs in keinem Zusammenhang damit steht, an welchen Stellen des erfindungsgemäßen Pressfittings Vorsprünge ausgebildet sind oder nicht, und dass es auch denkbar sein kann, Vorsprünge unterschiedlicher Ausbildungen an einem Pressfitting zu kombinieren.

Wie bereits angesprochen betrifft die vorliegende Erfindung eine Pressverbindung, umfassend ein Pressfitting gemäß der voranstehenden Beschreibung und eine weitere Fluidleitung, welche eine Presshülse und einen radial darin angeordneten Stützkörper umfasst, wobei die weitere Fluidleitung derart an dem zweiten Ende des Pressfittings angeordnet ist, dass der Stützkörper radial innerhalb des zweiten Endes des Pressfittings angeordnet ist und die Presshülse der weiteren Fluidleitung sowohl den Stützkörper als auch das zweite Ende des Pressfittings radial außen umgibt, so dass der Fluidströmungskanal im Bereich des zweiten Endes des Pressfittings durch die weitere Fluidleitung fortgeführt wird.

Es sei bereits an dieser Stelle darauf hingewiesen, dass sämtliche in Bezug auf das erfindungsgemäße Pressfitting beschriebenen Merkmale und Vorteile auch auf die erfindungsgemäße Pressverbindung Anwendung finden können.

Wie bereits voranstehend erwähnt, ist das zweite Ende des Grundkörpers eines erfindungsgemäßen Pressfittings derart ausgebildet, dass es im Wesentlichen ein Rohrstück nachahmt. Somit kann mit dem zweiten Ende des Grundkörpers eines erfindungsgemäßen Pressfittings ein Standard-Pressfitting oder ein weiteres erfindungsgemäßes Pressfitting verbunden werden.

Dabei kann, im aneinander angeordneten Zustand des Pressfittings und der weiteren Fluidleitung, der wenigstens eine Vorsprung des zweiten Endes des Pressfittings, in radialer Richtung zu dem Fluidströmungskanal des zweiten Endes des Pressfittings betrachtet, mit einer Nut einander überdeckend ausgerichtet sein, welche in dem Stützkörper der weiteren Fluidleitung gebildet ist. Wie dies in Bezug auf das erfindungsgemäße Pressfitting im Detail beschrieben worden ist, kann in einer Nut, welche insbesondere von einem Vorsprung des zweiten Endes des Pressfittings überdeckt sein kann, eine Dichtung angeordnet sein, wie beispielsweise ein O-Ring.

Ferner kann die Presshülse der weiteren Fluidleitung wenigstens eine, insbesondere nach radial außen vorstehende, Verdickung aufweisen, welche, in radialer Richtung zu dem Fluidströmungskanal des zweiten Endes des Pressfittings betrachtet, mit dem wenigstens einen Vorsprung des zweiten Endes des Pressfittings einander überdeckend ausgerichtet ist. So kann zum einen ein Presswerkzeug bzw. eine Pressbacke des Presswerkzeugs an der Presshülse ausgerichtet werden und zum anderen kann über die Verdickung der Presshülse konzentriert eine Kraft auf einen radial innerhalb der Verdickung der Presshülse angeordneten Vorsprung des zweiten Endes des Pressfittings ausgeübt werden, so dass ein Bereich dieses Vorsprungs des zweiten Endes verstärkt nach radial innen und in eine Nut des innerhalb des zweiten Endes des Pressfittings angeordneten Stützkörpers eines weiteren Pressfittings hineinfließen kann.

Die vorliegende Erfindung wird im Folgenden in größerem Detail anhand eines Ausführungsbeispiels mit Bezug auf die begleitenden Zeichnungen beschrieben werden, in welchen:
- Figur 1: eine Seitenquerschnittsansicht eines erfindungsgemäßen Pressfittings darstellt;
- Figur 2: eine teilweise geschnittene Seitenansicht einer erfindungsgemäßen Pressverbindung eines erfindungsgemäßen Pressfittings und eines Standard-Pressfittings darstellt;
- Figur 3a: ein Detail III aus Figur 2 in einem unverpressten Zustand darstellt;
- Figur 3b: das Detail III aus Figur 2 in einem verpressten Zustand darstellt;
- Figur 4: eine zu dem Detail III aus den Figuren 3a und 3b ähnliche Ansicht darstellt, wobei eine abgeänderte Variante des erfindungsgemäßen Pressfittings gezeigt ist; und
- Figur 5: eine zu Figur 4 analoge Ansicht einer weiteren Variante zeigt.

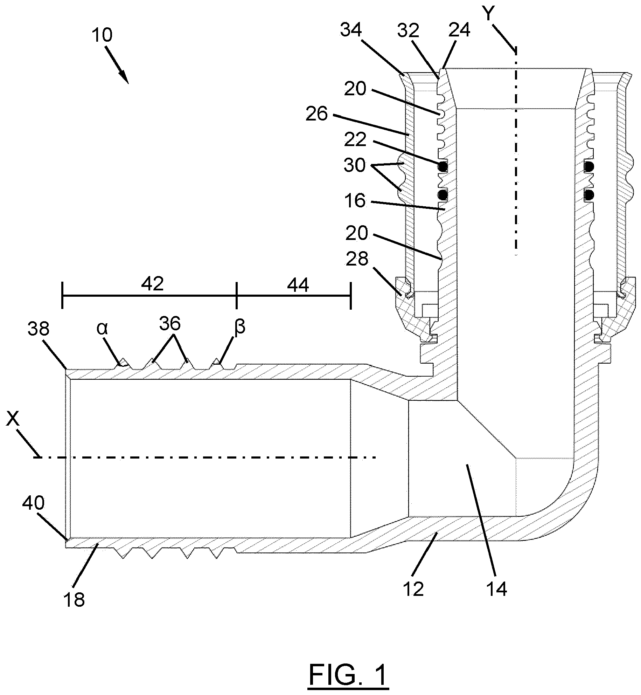

In Figur 1 ist ein erfindungsgemäßes Pressfitting allgemein mit dem Bezugszeichen 10 bezeichnet. Das Pressfitting 10 umfasst einen Grundkörper 12, welcher in seinem Inneren einen Fluidströmungskanal 14 definiert. Der Fluidströmungskanal 14 öffnet sich zu einer Außenseite hin an einem ersten Ende 16 und an einem zweiten Ende 18.

Das erste Ende 16 des Grundkörpers 12 ist als Stützkörper ausgebildet, um beispielsweise in ein in Figur 1 nicht dargestelltes Rohrstück eingeführt werden zu können. An dem Außenumfang des ersten Endes 16 des Grundkörpers 12 sind mehrere Nuten 20 angeordnet, wobei in zwei dieser Nuten eine Dichtung 22 in Form von jeweils einem O-Ring angeordnet ist. In dem in Figur 1 dargestellten Ausführungsbeispiel des erfindungsgemäßen Pressfittings 10 weisen die Nuten 20, welche einem Endrand 24 des ersten Endes 16 des Grundkörpers 12 benachbart angeordnet sind, eine größere radiale Tiefe und eine kleinere axiale Erstreckung, in Bezug auf eine Mittelachse Y des Fluidströmungskanals 14 im Bereich des ersten Endes 16 des Grundkörpers 12, als Nuten 20 auf, welche relativ zu dem Endrand 24 des ersten Endes 16 weiter entfernt angeordnet sind.

In dem in Figur 1 dargestellten Ausführungsbeispiel sind die Nuten 20, welche auf einer dem Endrand 24 des ersten Endes 16 zugewandten Seite der Dichtung 22 angeordnet sind, zueinander identisch und von den Nuten 20 verschieden, welche auf einer dem Endrand 24 des ersten Endes 16 abgewandten Seite der Dichtung 22 angeordnet und zueinander identisch sind.

Das erste Ende 16 des Grundkörpers 12 des erfindungsgemäßen Pressfittings 10 wird radial außen von einer Presshülse 26 umgeben, welche mit dem Grundkörper 12 über einen Haltering 28 verbunden ist. Die Presshülse 26 weist zwei Verdickungen 30 auf, welche dazu eingerichtet sind, mit einer Pressbacke eines nicht dargestellten Presswerkzeugs in Eingriff zu treten.

Um beispielsweise ein Rohrstück oder ein zweites Ende eines weiteren erfindungsgemäßen Pressfittings in einen Bereich zwischen der Presshülse 26 und dem ersten Ende 16 des Grundkörpers 12 einzuführen, ist das erste Ende 16 des Grundkörpers 12 zu dem Endrand 24 hin mit einer sich nach radial innen verjüngenden Einführschräge 32 ausgebildet. Zusätzlich ist die Presshülse 26 in einem dem Endrand 26 des ersten Endes 16 benachbarten Bereich 34 nach radial außen ausgeweitet.

Das zweite Ende 18 des Grundkörpers 12 weist in dem dargestellten Ausführungsbeispiel an seinem Außenumfang vier nach radial außen vorstehende und in Umfangsrichtung um das zweite Ende 18 des Grundkörpers 12 verlaufende Vorsprünge 36 auf. Dabei sind zwei Vorsprünge 36, welche einem Endrand 38 des zweiten Endes 18 des Grundkörpers 12 benachbart angeordnet sind, derart ausgebildet, dass ihre Flanken einen größeren Winkel α aufspannen als Vorsprünge 36, welche von dem Endrand 38 des zweiten Endes 18 weiter entfernt angeordnet sind und einen Winkel β aufspannen. In der dargestellten Ausführungsform erstrecken sich alle Vorsprünge 36 nach radial außen bis zu einem im Wesentlichen gleichen Außendurchmesser.

An einer inneren, das heißt dem Fluidströmungskanal 14 zugewandten, Seite des Grundkörpers 12 weist der Endrand 38 eine Fase 40 auf, um ein Einführen eines Stützkörpers eines weiteren Pressfittings zu erleichtern.

Wie in Figur 1 zu erkennen ist, weist ein erster Bereich 42 des zweiten Endes 18 des Grundkörpers 12, abgesehen von den Vorsprüngen 36, eine geringere Wandstärke des Grundkörpers 12 auf als ein sich in Bezug auf eine Mittelachse X des Fluidströmungskanals 14 im Bereich des zweiten Endes 18 an den Bereich 42 anschließender Bereich 44. Dabei ist der Bereich 44 an einer dem Endrand 38 des zweiten Endes 18 entgegengesetzten Seite des Bereichs 42 angeordnet. In dem dargestellten Ausführungsbeispiel bilden die Achsen X und Y einen 90° Winkel zueinander. Die radiale Erstreckung der Vorsprünge 36 ist jedoch größer als die des Grundkörpers 12 in dem anschließenden Bereich 44.

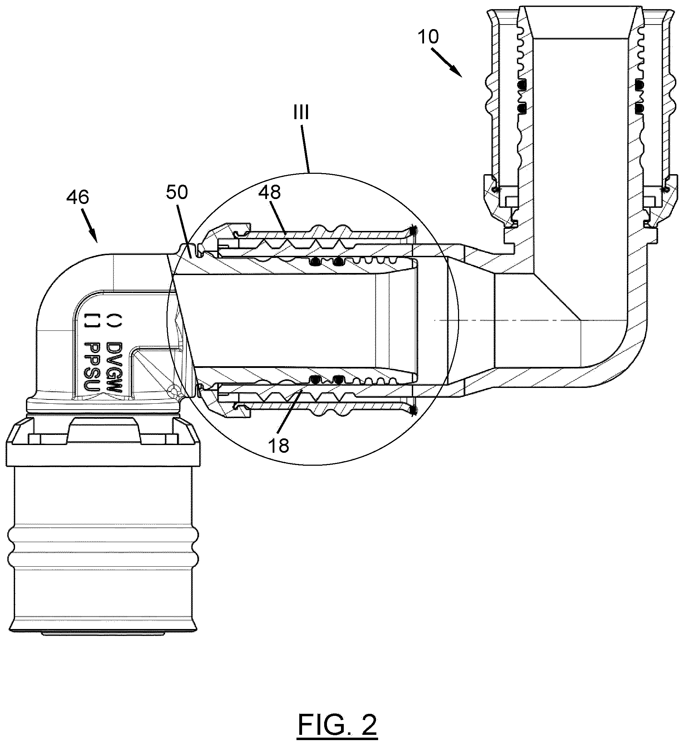

In Figur 2 ist nun zu erkennen, wie ein erfindungsgemäßes Pressfitting 10 an einem Standard-Pressfitting 46 angeordnet ist. Dabei ist das zweite Ende 18 des erfindungsgemäßen Pressfittings 10 in einen Bereich zwischen einer Stützhülse 48 und einem Stützkörper 50 des Standard-Pressfittings 46 eingesetzt. Die Presshülse 48 und der Stützkörper 50 sind dabei im Wesentlichen identisch zu der Presshülse 26 und dem Stützkörper 16, das heißt dem ersten Ende 16, des erfindungsgemäßen Pressfittings 10 ausgebildet. Da die Beschreibungen entsprechend auf sowohl diese Abschnitte des erfindungsgemäßen Pressfittings 10 als auch des Standard-Pressfittings 46 anwendbar sind, werden im Folgenden in Bezug auf die Presshülse 48 und den Stützkörper 50 des Standard-Pressfittings 46 gleiche Bezugszeichen verwendet werden wie sie für die Presshülse 26 und das erste Ende 16 des erfindungsgemäßen Pressfittings 10 verwendet worden sind.

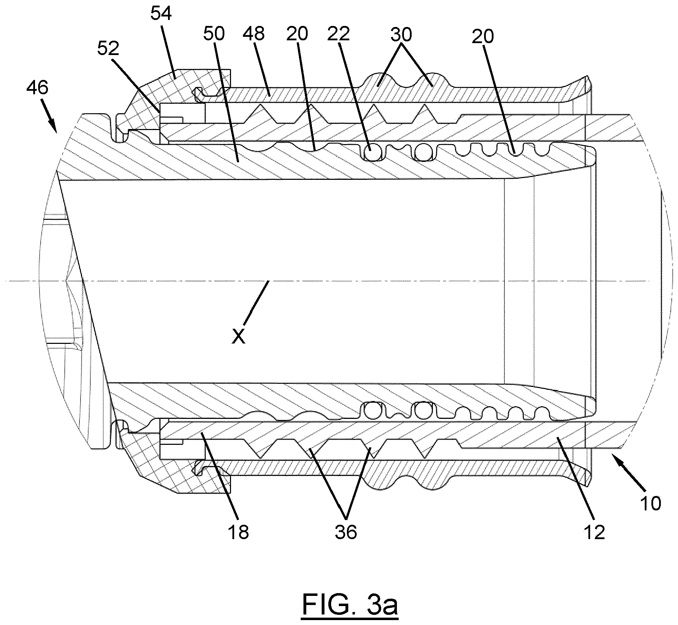

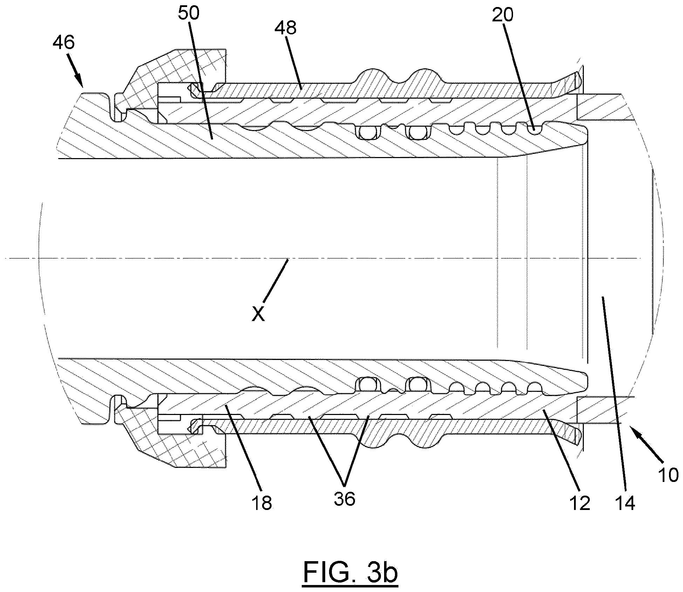

Das in Figur 2 mit dem Bezugszeichen III bezeichnete Detail der Verbindung des erfindungsgemäßen Pressfittings 10 und des Standard-Pressfittings 46 ist in den Figuren 3a und 3b vergrößert dargestellt.

Dabei ist deutlich, dass das zweite Ende 18 des erfindungsgemäßen Pressfittings 10 bis zu einem Anschlag 52 auf den Stützkörper 50 des Standard-Pressfittings 46 aufgeschoben ist, welcher von einem Haltering 54 gebildet ist, welcher die Presshülse 48 mit dem Stützkörper 50 des Standard-Pressfittings 46 verbindet. Durch diesen Anschlag 52 und eine entsprechende Ausbildung des Stützkörpers 50 und des zweiten Endes 18 des Grundkörpers 12 des erfindungsgemäßen Pressfittings 10 sind Verdickungen 30 in einer zu der Achse X radialen Richtung über Vorsprüngen 36 des zweiten Endes 18 des erfindungsgemäßen Pressfittings 10 und diese wiederum über Nuten 20 des Stützkörpers 50 ausgerichtet, in welchen O-Ringe 22 angeordnet sind.

Es ist in Figur 3a des Weiteren gut zu erkennen, dass Vorsprünge 36 über Nuten 20 angeordnet sein können und/oder Nuten 20 in einem Bereich angeordnet sein können, in welchem keine Vorsprünge 36 in einer radialen Richtung angeordnet sind, obwohl radial außerhalb die Presshülse 48 keine Verdickungen 30 aufweist. Um ein Fließen dieser Bereiche des zweiten Endes 18 des erfindungsgemäßen Pressfittings in die Nuten 20 des Stützkörper 50 zu fördern, kann es vorteilhaft sein, dass ein verwendetes Presswerkzeug an seinen Pressbacken Vorsprünge aufweist, welche an diesen Bereichen der Presshülse 48 konzentriert Kraft einleiten können.

In Figur 3b ist zu sehen, wie das zweite Ende 18 des erfindungsgemäßen Pressfittings 10 nach einem Verpressen in Eingriff mit dem Stützkörper 50 des Standard-Pressfittings 46 getreten ist. Das Material des Grundkörpers 12 ist in jede der Nuten 20 eingedrungen, so dass eine feste Verbindung des erfindungsgemäßen Pressfittings 10 mit dem Standard-Pressfitting 46 hergestellt worden ist.

Die radial äußeren Bereiche der Vorsprünge 36 des zweiten Endes 18 wurden auf das Einwirken der Presshülse 48 hin nach radial innen deformiert, wobei das Material des Grundkörpers 12 entsprechend in die Nuten 20 verlagert worden ist.

Durch die Verbindung des erfindungsgemäßen Pressfittings 10 mit dem Standard-Pressfitting 46 wird die in dem Grundkörper 12 definierte Fluidleitung 14 im Wesentlichen in Richtung der Achse X weitergeführt.

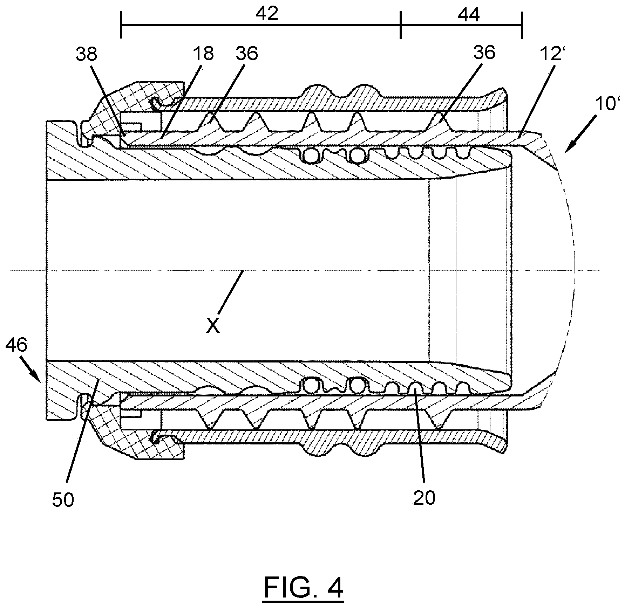

In Figur 4 ist nun eine Variante eines erfindungsgemäßen Pressfittings 10' gezeigt, wobei sich das Pressfitting 10' von dem oben beschriebenen Pressfitting 10 lediglich in der Ausbildung des Bereichs 44 unterscheidet, so dass sich die folgende Beschreibung auf eine Darstellung dieses Unterschieds beschränkt und im Übrigen auf die Beschreibung des Pressfittings 10 verwiesen ist.

Das Pressfitting 10' umfasst auch in dem Bereich 44 einen Vorsprung 36. Dabei kann der Vorsprung 36 insbesondere zu an dem Endrand 38 des zweiten Endes 18 des Grundkörpers 12 bzw. des Grundkörpers 12' des Pressfittings 10' benachbart angeordneten Vorsprüngen 36 gleich ausgebildet sein. Bei dem Grundkörper 12' kann eine Wandstärke in dem Bereich 44 neben dem dort ausgebildeten Vorsprung 36 zu einer Wandstärke in dem Bereich 42 neben dort ausgebildeten Vorsprüngen 36 im Wesentlichen identisch sein. Wie in Figur 4 zu erkennen ist, ist der in dem Bereich 44 angeordnete Vorsprung 36 des Grundkörpers 12', in einem an einem Stützkörper 50 eines weiteren Pressfittings 46 angeordneten Zustand, in einer radialen Richtung über Nuten 20 des Stützkörper 50 angeordnet, so dass sich der Grundkörper 12', bei einer Krafteinwirkung auf den Vorsprung 36 der Grundkörper 12', derart in die Nuten 20 des Stützkörper 50 verlagern kann, dass eine stabile Verbindung zwischen dem Pressfitting 10` und dem weiteren Pressfitting 46 hergestellt werden kann.

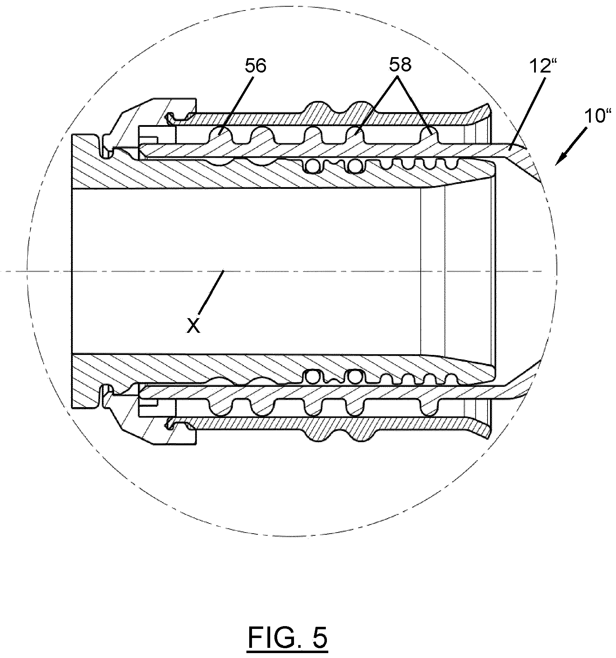

Figur 5 zeigt eine zu Figur 4 analoge Ansicht eines Pressfittings 10", wobei diesbezüglich wieder auf die Beschreibungen der Pressfittings 10 und 10' mit Ausnahme des folgenden Unterschieds verwiesen sei. Der Grundkörper 12" des Pressfittings 10" weist Vorsprünge 56 und 58 auf, welche an ihrem, in Bezug auf die Mittelachse X, radial äußeren Ende einen Radius aufweisen, in welchen die Flanken der Vorsprünge 56 und 58 auslaufen. Dabei können sich die Flanken der Vorsprünge 58, welche in Bezug zu der Achse X eine kleinere axiale Erstreckung aufweisen, abschnittsweise im Wesentlichen parallel zueinander erstrecken, bevor sie in den voranstehend beschriebenen Radius übergehen. Die Flanken der breiteren Vorsprünge 56 können beispielsweise einen Winkel von zwischen 5° und 20° aufspannen, so dass sich der Vorsprung 56 mit zunehmendem Abstand von der Mittelachse X bereits verjüngt, bevor die Flanken in den Radius übergehen. Ferner kann an dem Übergang zwischen Flanke und Radius eines Vorsprungs ein stufenartiger bzw. mit einer Kante ausgebildeter Übergang vorhanden sein.

## Patentansprüche

1. Pressverbindung, umfassend:
ein Pressfitting (10, 10', 10"), wiederum umfassend einen Grundkörper (12, 12', 12"), welcher in seinem Inneren einen Fluidströmungskanal (14) definiert und begrenzt,
wobei der Grundkörper (12, 12', 12") ein erstes (16) und ein zweites Ende (18) aufweist, an welchen sich der Fluidströmungskanal (14) zu einer Außenseite hin öffnet,
wobei das erste Ende (16) des Pressfittings (10, 10', 10") als männliches Pressverbindungsstück ausgebildet ist, welches dazu eingerichtet ist, zumindest teilweise in ein übergeordnetes, insbesondere aus Kunststoff ausgebildetes, Rohrstück, welches nicht zu dem erfindungsgemäßen Pressfitting (10, 10', 10") gehört, eingeführt zu werden, um diesem Rohrstück als darin angeordneter Stützkörper (16) für eine Verpressung des Rohrstücks mit dem Pressfitting (10, 10', 10") zu dienen,
wobei das zweite Ende (18) des Pressfittings (10, 10', 10") als weibliches Pressverbindungsstück ausgebildet ist, welches dazu eingerichtet ist, ein Rohrstück für eine Verpressung mit einem weiteren Pressfitting bereitzustellen,
wobei das Pressfitting (10, 10', 10") eine Presshülse (26) umfasst, welche an dem Grundkörper (12, 12', 12") derart angeordnet ist, dass sie das erste Ende (16) des Grundkörpers (12, 12', 12") zumindest teilweise umgibt, und
wobei der Grundkörper (12, 12', 12") aus Kunststoff ausgebildet ist,
**dadurch gekennzeichnet, dass** die Pressverbindung ferner umfasst:
eine weitere Fluidleitung (46), welche eine Presshülse (48) und einen radial darin angeordneten Stützkörper (50) umfasst, wobei die weitere Fluidleitung (46) derart an dem zweiten Ende (18) des Pressfittings (10, 10', 10") angeordnet ist, dass der Stützkörper (50) radial innerhalb des zweiten Endes (18) des Pressfittings (10, 10', 10") angeordnet ist und die Presshülse (48) der weiteren Fluidleitung (46) sowohl den Stützkörper (50) als auch das zweite Ende (18) des Pressfittings (10, 10', 10") radial außen umgibt, so dass der Fluidströmungskanal (14) im Bereich des zweiten Endes (18) des Pressfittings (10, 10', 10") durch die weitere Fluidleitung (46) fortgeführt wird.

2. Pressverbindung nach Anspruch 1,
**dadurch gekennzeichnet, dass** der Grundkörper (12, 12', 12") mit seinem ersten Ende (16) und seinem zweiten Ende (18) einstückig ausgebildet ist.

3. Pressverbindung nach einem der vorhergehenden Ansprüche,
**dadurch gekennzeichnet, dass** der Grundkörper (12, 12', 12") aus PPSU ausgebildet ist.

4. Pressverbindung nach einem der vorhergehenden Ansprüche,
**dadurch gekennzeichnet, dass** der Grundkörper (12, 12', 12") unter Verwendung eines Spritzgussverfahrens hergestellt ist.

5. Pressverbindung nach einem der vorhergehenden Ansprüche,
**dadurch gekennzeichnet, dass** im Bereich (42) des zweiten Endes (18) des Grundkörpers (12, 12', 12") wenigstens ein nach radial außen vorstehender Vorsprung (36, 56, 58) ausgebildet ist, welcher den Außenumfang des Grundkörpers (12, 12', 12") zumindest teilweise umgibt.

6. Pressverbindung nach Anspruch 5,
**dadurch gekennzeichnet, dass** der wenigstens eine Vorsprung (36, 56, 58) in Umfangsrichtung um den Grundkörper (12, 12', 12") einen im Wesentlichen dreieckigen Querschnitt aufweist, wobei ein Winkel (α, β), welcher von den beiden Flanken des Vorsprungs (36, 56, 58) aufgespannt wird, vorteilhafterweise zwischen 5° und 90°, insbesondere zwischen 45° und 70°, beträgt.

7. Pressverbindung nach einem der vorhergehenden Ansprüche,
**dadurch gekennzeichnet, dass** der wenigstens eine Vorsprung (36, 56, 58) eine größere Erstreckung in Bezug auf den Grundkörper (12) nach radial außen aufweist als ein Abschnitt (44) des Grundkörpers (12), welcher sich an einen Bereich (42) des wenigstens einen Vorsprungs (36, 56, 58) an einer dem zweiten Ende (18) des Grundkörpers (12) gegenüberliegenden Seite anschließt.

8. Pressverbindung nach Anspruch 7,
**dadurch gekennzeichnet, dass** ein Verhältnis der Wandstärke des Grundkörpers (12) in dem anschließenden Abschnitt (44) zu der Wandstärke des Grundkörpers (12) an einer Stelle des wenigstens einen Vorsprungs (36, 56, 58) zwischen 1 :3 und 1,9:2, insbesondere 1,5 : 2,1, beträgt.

9. Pressverbindung nach einem der vorhergehenden Ansprüche,
**dadurch gekennzeichnet, dass** im Bereich des ersten Endes (16) des Grundkörpers (12, 12', 12") wenigstens eine Nut (20) angeordnet ist, welche den Grundkörper (12, 12', 12") zumindest teilweise an dessen Außenumfang umgibt.

10. Pressverbindung nach einem der vorhergehenden Ansprüche,
**dadurch gekennzeichnet, dass** im Bereich des ersten Endes (16) des Grundköpers (12, 12', 12"), insbesondere in wenigstens einer dort angeordneten Nut (20), eine Dichtung (22) aus einem elastischen Material angeordnet ist.

11. Pressverbindung nach einem der vorhergehenden Ansprüche,
**dadurch gekennzeichnet, dass** ein Außendurchmesser des wenigstens einen Vorsprungs (36, 56, 58), insbesondere aller Vorsprünge (36, 56, 58), im Bereich des zweiten Endes (18) des Grundkörpers (12, 12', 12") einem Innendurchmesser der Presshülse (26) im Wesentlichen entspricht, vorteilhafterweise geringfügig größer ist als der Innendurchmesser der Presshülse (26).

12. Pressverbindung nach einem der vorhergehenden Ansprüche,
**dadurch gekennzeichnet, dass** im aneinander angeordneten Zustand des Pressfittings (10, 10', 10") und der weiteren Fluidleitung (46) der wenigstens eine Vorsprung (36, 56, 58) des zweiten Endes (18) des Pressfittings (10, 10', 10"), in radialer Richtung zu dem Fluidströmungskanal (14) des zweiten Endes (18) des Pressfittings (10, 10', 10") betrachtet, mit einer Nut (20) einander überdeckend ausgerichtet ist, welche in dem Stützkörper (50) der weiteren Fluidleitung (46) gebildet ist.

13. Pressverbindung nach einem der vorhergehenden Ansprüche,
**dadurch gekennzeichnet, dass** die Presshülse (48) der weiteren Fluidleitung (46) wenigstens eine, insbesondere nach radial außen vorstehende, Verdickung (30) aufweist, welche, in radialer Richtung zu dem Fluidströmungskanal (14) des zweiten Endes des Pressfittings (10, 10', 10") betrachtet, mit dem wenigstens einen Vorsprung (36, 56, 58) des zweiten Endes (18) des Pressfittings (10, 10', 10") einander überdeckend ausgerichtet ist.

## Claims

1. Press-fit connection comprising:
a press fitting (10, 10', 10"), in turn comprising
a main body (12, 12', 12") which defines and delimits a fluid flow channel (14) in its interior,
the main body (12, 12', 12") having a first (16) and a second end (18) at which the fluid flow channel (14) opens to an outer side,
the first end (16) of the press fitting (10, 10', 10") being designed as a male press-fit connection piece which is designed to be introduced at least partially into a superordinate pipe piece, in particular made of plastics material, which is not part of the press fitting (10, 10', 10") according to the invention, in order to serve this pipe piece as support body (16) arranged therein for pressing the pipe piece with the press fitting (10, 10', 10"),
the second end (18) of the press fitting (10, 10', 10") being designed as a female press-fit connection piece which is designed to provide a pipe piece for pressing with a further press fitting,
the press fitting (10, 10', 10") comprising a pressing sleeve (26) which is arranged on the main body (12, 12', 12") in such a way that it at least partially surrounds the first end (16) of the main body (12, 12', 12"), and
the main body (12, 12', 12") being made of plastics material, **characterised in that** the press-fit connection further comprises:
a further fluid line (46), which comprises a pressing sleeve (48) and a support body (50) arranged radially therein, the further fluid line (46) being arranged at the second end (18) of the press fitting (10, 10', 10") in such a way that the support body (50) is arranged radially inside the second end (18) of the press fitting (10, 10', 10") and the pressing sleeve (48) of the further fluid line (46) surrounds both the support body (50) and the second end (18) of the press fitting (10, 10', 10") radially on the outside, so that the fluid flow channel (14) is continued through the further fluid line (46) in the region of the second end (18) of the press fitting (10, 10', 10").

2. Press-fit connection according to claim 1,
**characterised in that** the main body (12, 12', 12") is formed in one piece with its first end (16) and its second end (18).

3. Press-fit connection according to either of the preceding claims,
**characterised in that** the main body (12, 12', 12") is made of PPSU.

4. Press-fit connection according to any of the preceding claims,
**characterised in that** the main body (12, 12', 12") is produced using an injection moulding process.

5. Press-fit connection according to any of the preceding claims,
**characterised in that** at least one radially outwardly projecting projection (36, 56, 58) is formed in the region (42) of the second end (18) of the main body (12, 12', 12"), which projection at least partially surrounds the outer periphery of the main body (12, 12', 12").

6. Press-fit connection according to claim 5,
**characterised in that** the at least one projection (36, 56, 58) has a substantially triangular cross section in the circumferential direction around the main body (12, 12', 12"), an angle (a, β) spanned by the two flanks of the projection (36, 56, 58) advantageously being between 5° and 90°, in particular between 45° and 70°.

7. Press-fit connection according to any of the preceding claims,
**characterised in that** the at least one projection (36, 56, 58) has a greater extension with respect to the main body (12) radially outwards than a portion (44) of the main body (12) which adjoins a region (42) of the at least one projection (36, 56, 58) at a side opposite the second end (18) of the main body (12).

8. Press-fit connection according to claim 7,
**characterised in that** a ratio of the wall thickness of the main body (12) in the adjoining portion (44) to the wall thickness of the main body (12) at a location of the at least one projection (36, 56, 58) is between 1:3 and 1.9:2, in particular 1.5:2.1.

9. Press-fit connection according to any of the preceding claims,
**characterised in that** at least one groove (20) which at least partially surrounds the main body (12, 12', 12") on its outer periphery is arranged in the region of the first end (16) of the main body (12, 12', 12").

10. Press-fit connection according to any of the preceding claims,
**characterised in that** a seal (22) made of an elastic material is arranged in the region of the first end (16) of the main body (12, 12', 12"), in particular in at least one groove (20) arranged there.

11. Press-fit connection according to any of the preceding claims,
**characterised in that** an outer diameter of the at least one projection (36, 56, 58), in particular of all of the projections (36, 56, 58), in the region of the second end (18) of the main body (12, 12', 12") substantially corresponds to an inner diameter of the pressing sleeve (26), advantageously is slightly larger than the inner diameter of the pressing sleeve (26).

12. Press-fit connection according to any of the preceding claims,
**characterised in that** in the state in which the press fitting (10, 10', 10") and the further fluid line (46) are arranged on one another, the at least one projection (36, 56, 58) of the second end (18) of the press fitting (10, 10', 10"), viewed in the radial direction with respect to the fluid flow channel (14) of the second end (18) of the press fitting (10, 10', 10"), is oriented so as to overlap with a groove (20) which is formed in the support body (50) of the further fluid line (46).

13. Press-fit connection according to any of the preceding claims,
**characterised in that** the pressing sleeve (48) of the further fluid line (46) has at least one thickened portion (30), in particular projecting radially outwards, which, viewed in the radial direction with respect to the fluid flow channel (14) of the second end of the press fitting (10, 10', 10"), is oriented so as to overlap with the at least one projection (36, 56, 58) of the second end (18) of the press fitting (10, 10', 10").

## Revendications

1. Raccord par compression comprenant :
un raccord à sertir (10, 10', 10"), comprenant à son tour
un corps de base (12, 12', 12") qui définit et délimite à l'intérieur un canal d'écoulement de fluide (14),
dans lequel le corps de base (12, 12', 12") présente une première (16) et une deuxième extrémité (18), au niveau desquelles le canal d'écoulement de fluide (14) s'ouvre vers un côté extérieur,
dans lequel la première extrémité (16) du raccord à sertir (10, 10', 10") est réalisée sous la forme d'une pièce de raccordement par compression mâle qui est conçue pour être introduite au moins partiellement dans une pièce tubulaire supérieure, en particulier réalisée en matière plastique, qui n'appartient pas au raccord à sertir (10, 10', 10") selon l'invention, afin de servir à cette pièce tubulaire de corps d'appui (16) disposé dans celle-ci pour un sertissage de la pièce tubulaire avec le raccord à sertir (10, 10', 10"),
dans lequel la deuxième extrémité (18) du raccord à sertir (10, 10', 10") est réalisée sous la forme d'un raccord par compression femelle qui est conçu pour mettre à disposition une pièce tubulaire pour un sertissage avec un autre raccord à sertir,
dans lequel le raccord à sertir (10, 10', 10") comprend une douille de sertissage (26) qui est disposée sur le corps de base (12, 12', 12") de telle sorte qu'elle entoure au moins partiellement la première extrémité (16) du corps de base (12, 12', 12"), et dans lequel le corps de base (12, 12', 12") est réalisé en matière plastique,
**caractérisé en ce que** le raccord par compression comprend en outre : une autre conduite de fluide (46) qui comprend une douille de sertissage (48) et un corps d'appui (50) disposé radialement dans celle-ci, dans lequel l'autre conduite de fluide (46) est disposée sur la deuxième extrémité (18) du raccord à sertir (10, 10', 10") de telle sorte que le corps d'appui (50) est disposé radialement à l'intérieur de la deuxième extrémité (18) du raccord à sertir (10, 10', 10") et que la douille de sertissage (48) de l'autre conduite de fluide (46) entoure radialement à l'extérieur aussi bien le corps d'appui (50) que la deuxième extrémité (18) du raccord à sertir (10, 10', 10"), de sorte que le canal d'écoulement de fluide (14) se poursuit dans la zone de la deuxième extrémité (18) du raccord à sertir (10, 10', 10") par l'autre conduite de fluide (46).

2. Raccord par compression selon la revendication 1,
**caractérisé en ce que** le corps de base (12, 12', 12") est formé d'une seule pièce avec sa première extrémité (16) et sa deuxième extrémité (18).

3. Raccord par compression selon l'une des revendications précédentes,
**caractérisé en ce que** le corps de base (12, 12', 12") est réalisé en PPSU.

4. Raccord par compression selon l'une des revendications précédentes,
**caractérisé en ce que** le corps de base (12, 12', 12") est fabriqué en utilisant un procédé de moulage par injection.

5. Raccord par compression selon l'une des revendications précédentes,
**caractérisé en ce que** dans la zone (42) de la deuxième extrémité (18) du corps de base (12, 12', 12") est formée au moins une saillie (36, 56, 58) faisant saillie radialement vers l'extérieur, qui entoure au moins partiellement la périphérie extérieure du corps de base (12, 12', 12").

6. Raccord par compression selon la revendication 5,
**caractérisé en ce que** ladite au moins une saillie (36, 56, 58) présente une section transversale sensiblement triangulaire dans la direction périphérique autour du corps de base (12, 12', 12"), un angle (α, β) formé par les deux flancs de la saillie (36, 56, 58) étant avantageusement compris entre 5° et 90°, notamment entre 45° et 70°.

7. Raccord par compression selon l'une des revendications précédentes,
**caractérisé en ce que** ladite au moins une saillie (36, 56, 58) présente une extension radialement extérieure par rapport au corps de base (12) supérieure à celle d'une portion (44) du corps de base (12) qui se raccorde à une zone (42) de ladite au moins une saillie (36, 56, 58) sur un côté opposé à la deuxième extrémité (18) du corps de base (12).

8. Raccord par compression selon la revendication 7,
**caractérisé en ce qu'**un rapport entre l'épaisseur de paroi du corps de base (12) dans la section adjacente (44) et l'épaisseur de paroi du corps de base (12) à un endroit de ladite au moins une saillie (36, 56, 58) est compris entre 1:3 et 1,9:2, en particulier 1,5:2,1.

9. Raccord par compression selon l'une des revendications précédentes,
**caractérisé en ce que** dans la zone de la première extrémité (16) du corps de base (12, 12', 12") est disposée au moins une rainure (20) qui entoure le corps de base (12, 12', 12") au moins partiellement sur sa périphérie extérieure.

10. Raccord par compression selon l'une des revendications précédentes,
**caractérisé en ce qu'**un joint d'étanchéité (22) en matériau élastique est disposé dans la zone de la première extrémité (16) du corps de base (12, 12', 12"), en particulier dans au moins une rainure (20) disposée à cet endroit.

11. Raccord par compression selon l'une des revendications précédentes,
**caractérisé en ce qu'**un diamètre extérieur de ladite au moins une saillie (36, 56, 58), notamment de toutes les saillies (36, 56, 58), dans la zone de la deuxième extrémité (18) du corps de base (12, 12', 12") correspond sensiblement à un diamètre intérieur de la douille de sertissage (26), avantageusement légèrement supérieur au diamètre intérieur de la douille de sertissage (26).

12. Raccord par compression selon l'une des revendications précédentes,
**caractérisé en ce que,** lorsque le raccord à sertir (10, 10', 10") et l'autre conduite de fluide (46) sont disposés l'un contre l'autre, ladite au moins une saillie (36, 56, 58) de la deuxième extrémité (18) du raccord à sertir (10, 10', 10"), vu dans la direction radiale par rapport au canal d'écoulement de fluide (14) de la deuxième extrémité (18) du raccord à sertir (10, 10', 10"), est orientée de manière à se recouvrir mutuellement avec une rainure (20) qui est formée dans le corps d'appui (50) de la conduite de fluide supplémentaire (46).

13. Raccord par compression selon l'une des revendications précédentes, **caractérisé en ce que** la douille de sertissage (48) de l'autre conduite de fluide (46) présente au moins un renflement (30), en particulier faisant saillie radialement vers l'extérieur, qui, vu dans la direction radiale vers le canal d'écoulement de fluide (14) de la deuxième extrémité du raccord à sertir (10, 10', 10"), est orienté de manière à se recouvrir avec ladite au moins une saillie (36, 56, 58) de la deuxième extrémité (18) du raccord à sertir (10, 10', 10").
